# EUROPEAN PATENT SPECIFICATION

(11) **EP 3 496 489 B1**
(45) Date of publication and mention of the grant of the patent: **13.05.2020**
(21) Application number: 17902290.0
(22) Date of filing: 24.03.2017
(51) Int. Cl.: H04W 72/04, H04L 5/00

(54) **COMMUNICATION METHOD, TERMINAL AND NETWORK DEVICE**
KOMMUNIKATIONSVERFAHREN, ENDGERÄT UND NETZWERKVORRICHTUNG
PROCÉDÉ DE COMMUNICATION, TERMINAL ET DISPOSITIF RÉSEAU

(43) Date of publication of application: 12.06.2019
(73) Proprietor: GUANGDONG OPPO MOBILE TELECOMMUNICATIONS CORP., LTD., Wusha, Chang'an Dongguan, Guangdong 523860 (CN)
(72) Inventor: LIN, Yanan, Dongguan, Guangdong 523860 (CN); XU, Hua, Ottawa, Ontario K2M1N6 (CA)
(74) Representative: Manitz Finsterwald Patent- und Rechtsanwaltspartnerschaft mbB
(86) International application number: PCT/CN2017/078147
(87) International publication number: WO 2018/170907

(56) References cited:
- CN-A- 104 904 154
- US-A1- 2016 262 118
- HUAWEI HISILICON OPPO NTT DOCOMO VIVO LENOVO MOTOROLA MOBILITY CATT: "WF on PUCCH multiplexing", 3GPP DRAFT; R1-1703862 WF ON PUCCH MULTIPLEXING_V8, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 16 February 2017 (2017-02-16), XP051236655, Retrieved from the Internet: URL:http://www.3gpp.org/ftp/tsg_ran/WG1_RL 1/TSGR1_88/Docs/ [retrieved on 2017-02-16]
- MCC SUPPORT: "Draft Report of 3GPP TSG RAN WG1 #88 v0.1.0", 3GPP DRAFT; DRAFT_MINUTES_REPORT_RAN1#88_V010, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170403 - 20170407 23 February 2017 (2017-02-23), XP051237038, Retrieved from the Internet: URL:http://www.3gpp.org/ftp/tsg_ran/WG1_RL 1/TSGR1_88/Report/ [retrieved on 2017-02-23]
- NOKIA ET AL: "UCI multiplexing in the presence of UL data", 3GPP DRAFT; R1-1703322_UCI WITH UL DATA_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 12 February 2017 (2017-02-12), XP051210452, Retrieved from the Internet: URL:http://www.3gpp.org/ftp/Meetings_3GPP_ SYNC/RAN1/Docs/ [retrieved on 2017-02-12]
- 3GPP: "3rd Generation Partnership Project, Technical Specification Group Radio Access Network; Study on New Radio (NR) Access Technology (Release 14)", 3GPP TSG TR 38.912 v1.0.0., 16 March 2017 (2017-03-16), pages 1-74, XP051628420,
- NTT DOCOMO, INC.: "Status Report to TSG", 3GPP TSG RAN Meeting #75 RP-170376, 6 March 2017 (2017-03-06), XP051507054, Dubrovnik, Croatia

## Description

### TECHNICAL FIELD

The present disclosure relates to the field of communication, and particularly to a communication method, a terminal and a network device.

### BACKGROUND

In a new radio (NR) system, such as a 5G communication system, there are two kinds of Physical Uplink Control Channels (PUCCHs) that supports two kinds of time lengths. One of them is called short Physical Uplink Control Channel (short-PUCCH), and the other is called long Physical Uplink Control Channel (long-PUCCH). Among them, the short-PUCCH may include one or two time domain symbols, and the long-PUCCH may include at least 4 time domain symbols.

In NR systems, feedback information corresponding to different traffic channels may be transmitted by using PUCCHs with different lengths. When the feedback information of different traffic channels is transmitted by using PUCCHs of different lengths, and the PUCCHs of different lengths are located in the same time unit, how to transmit the feedback information of the different traffic channels is a technical problem to be solved. The features of the preamble of the independent claims are known from HUAWEI HISILICON OPPO NTT DOCOMO VIVO LENOVO MOTOROLA MOBILITY CATT: "WF on PUCCH multiplexing", 3GPP DRAFT; R1-1703862 WF ON PUCCH MULTIPLEXING V8, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE.

### SUMMARY

The invention is defined by the appended independent claims. Dependent claims constitute embodiments of the invention. Any other subject-matter falling outside the scope of the claims is to be regarded as an example not in accordance with the invention.

### BRIEF DESCRIPTION OF THE DRAWINGS

FIG. 1 is an architecture diagram illustrating of the application scenario in an embodiment of the present disclosure;
FIG. 2 is a diagram illustrating of the application scenario of an embodiment of the present disclosure;
FIG. 3 is a flowchart diagram illustrating of the communication method of an embodiment of the present disclosure;
FIG. 4 is a diagram illustrating of the time unit in the communication method of an embodiment of the present disclosure;
FIG. 5 is a diagram illustrating of the time unit in the communication method of an embodiment of the present disclosure;
FIG. 6 is a flowchart diagram illustrating of the communication method in of embodiment of the present disclosure;
FIG. 7 is a structure diagram illustrating of the terminal of an embodiment of the present disclosure;
FIG. 8 is a structure diagram illustrating of the network device of an embodiment of the present disclosure;
FIG. 9 is a structure diagram illustrating of the terminal of an embodiment of the present disclosure;
FIG. 10 is a structure diagram illustrating of the network device of an embodiment of the present disclosure;

### DETAILED DESCRIPTION

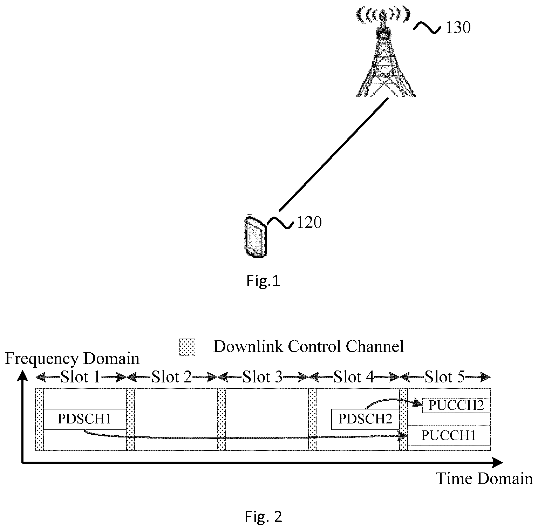

An architecture diagram illustrating of an application scenario in which the communication method, the terminal, and the communication device of an embodiment of the present disclosure may be applied, as shown in fig. 1. It should be understood that the embodiment of the present disclosure may not limited to the system architecture shown in fig. 1. Moreover, the device in fig. 1 may be hardware, or may be functionally divided software or a combination of the two.

As can be obtained from fig. 1, the communication system, to which the communication method of the embodiment of the present disclosure may be applied, may include the terminal 120 and the communication device 130.

One example of the communication device 130 is a base station. It should be understood that the specific type of the base station is not limited in the embodiment of the present disclosure. In systems with different wireless access technologies, the names of devices with base station function may vary. For convenience of description, in all embodiments of the present disclosure, the above apparatus for providing a wireless communication function to the terminal is collectively referred to as a base station, such as a base station equipment in future network, a small base station equipment (pico), etc.

The terminal 120 may be user equipment (UE). The UE can communication with one or more core networks (CN) via a radio access network (RAN). The UE may be referred to as an access terminal, a terminal device, a subscriber unit, a subscriber station, a mobile station, a mobile carriage, a remote station, a remote terminal, a mobile device, a user terminal, a wireless communication device, a user agent, or a user device. The UE may be a cellular phone, a cordless phone, a session initiation protocol (SIP) phone, a wireless local loop (WLL) station, a personal digital assistant (PDA), a handheld device with wireless communication function, a computing device or other device connected to a wireless modem, an in-vehicle device, a wearable device or Internet of Things, a terminal device in a vehicle network, and any form of terminal device in a future network.

Communication between the terminal 120 and the network device 130 is possible. For example, the network 130 may transmit downlink service data to the terminal 120, and the terminal 120 may feedback the receiving status of the downlink service data to the network device 130. For example, the terminal 120 may send an acknowledgement (ACK) information to the network device 130, indicating that the terminal 120 correctly receives the downlink service data, and for example, the terminal 120 may send a negative acknowledgement (NACK) information to the network device 130, indicating that the terminal 120 does not receive the downlink service data or erroneously receives the downlink service data. Wherein, the ACK information and the NACK information may be referred to as uplink control information.

Specifically, the terminal 120 may send the uplink control information to the network device 130 by a PUCCH. Wherein, the terminal 120 may send the uplink control information to the network device 130 by PUCCHs with two lengths which may be called long-PUCCH and short-PUCCH, respectively. The long-PUCCH may include at least 4 time domain symbols, and the short-PUCCH may include 1 or 2 time domain symbols.

When the terminal 120 communicates with the network device 130, the feedback delays of different downlink service data sent by the network device 130 to the terminal 120 may be different. The feedback information of different feedback delays may be transmitted by PUCCHs with different lengths.

As shown in fig. 2, the network device 130 transmits a physic downlink data channel (PDSCH) 1 to the terminal 120 in a slot 1. The feedback delay of the PDSCH 1 is 4 slots. The terminal may send the feedback information (which may be referred to as first uplink control information) of the PDSCH 1 by the PUCCH 1 (which may be referred to as a first uplink control channel). The network device 130 transmits a PDSCH 2 to the terminal 120 in a slot 4. The feedback delay of the PDSCH 2 is 1 slot. The terminal may send the feedback information (which may be referred to as second uplink control information) of the PDSCH 2 by the PUCCH 2 (which may be referred to as a second uplink control channel).

Further, as can be obtained from fig. 2, the feedback time of the PDSCH 1 and the feedback time of the PDSCH 2 are both located in slot 5. That is, the PUCCH 1 configured by the terminal 130 for the feedback information of the PDSCH 1 is located in the same slot as the PUCCH 2 configured by the terminal 130 for the feedback information of the PDSCH 2.

However, in the current communication system or communication method, a method of how to transmit PUCCHs of different lengths in the same time unit has not been proposed.

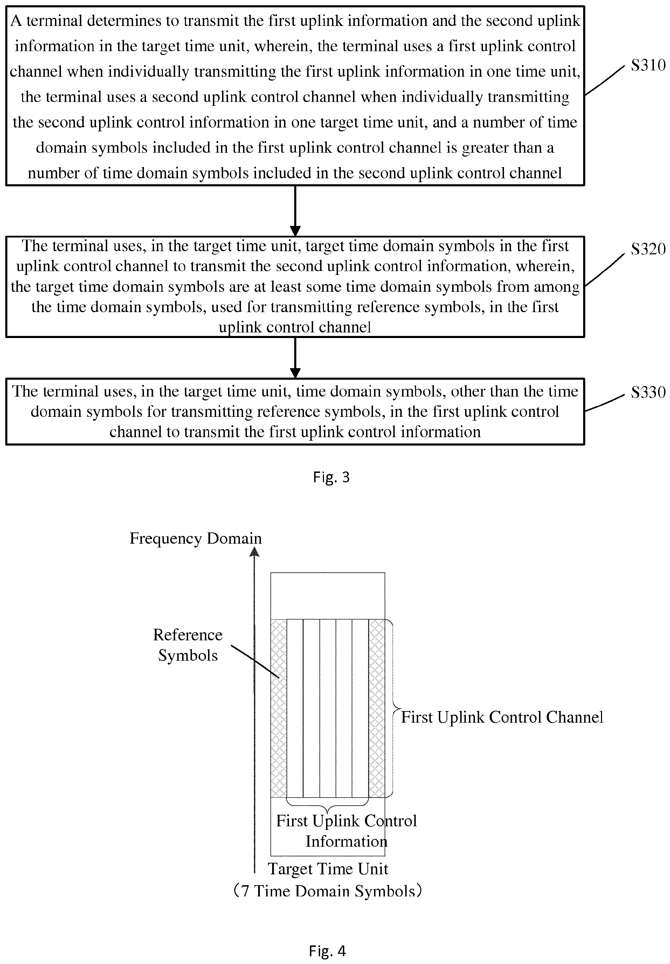

Fig. 3 is a flowchart diagram illustrating of the communication method in one embodiment of the present disclosure. It should understood that fig. 3 shows the steps or operations of the communication method, but these steps or operations are merely examples, and the embodiments of the present disclosure may also execute other operations or variations of the operations in fig. 3. Moreover, the various steps in fig. 3 may be executed in a different order than that present in fig. 3, and it is possible that not all operations in fig. 3 are to be executed.

In S310, the terminal determines to transmit the first uplink information and the second uplink information in the target time unit.

Wherein, the terminal uses a first uplink control channel when individually transmitting the first uplink information in one time unit, the terminal uses a second uplink control channel when individually transmitting the second uplink control information in one target time unit, and a number of time domain symbols included in the first uplink control channel is greater than a number of time domain symbols included in the second uplink control channel.

The first uplink control information may be used for feedback the receiving state of the terminal on receiving one or more first downlink data channels (such as a long physical downlink shared channel). The second uplink control information may be used for feedback the receiving state of the terminal on receiving one or more second downlink data channels (such as a short physical downlink shared channel).

In S310, the first uplink control channel used by the terminal when individually transmitting the first uplink information in one time unit refers to a channel for transmitting the first uplink control information in the time unit when the terminal determines that only the first uplink control information needs to be sent in a certain time unit, and does not need to send the second uplink control information. the second uplink control channel used by the terminal when individually transmitting the second uplink information in the target time unit refers to a channel for transmitting the second uplink control information in the time unit when the terminal determines that only the second uplink control information needs to be sent in a certain time unit, and does not need to send the first uplink control information.

Wherein, when the terminal sends information by using the first uplink control channel and the second uplink control channel separately, the number of time domain symbols occupied by the first uplink control channel is different from the number of time domain symbols occupied by the second uplink control channel. Specifically, the number of the time domain symbols occupied by the first uplink control channel may be greater than the number of time domain symbols occupied by the second uplink control channel.

For the convenience of subsequent description, in this embodiment of the present disclosure, when the terminal sends information by using the first uplink control channel and the second uplink control channel separately, the number of the time domain symbols occupied by the first uplink control channel is referred to as the number of first time domain symbols, and the number of the time domain symbols occupied by the second uplink control channel is referred to as the number of second time domain symbols.

In S310, the terminal determining to transmit the first uplink control information and the second uplink control information in the target time unit, may comprise that the terminal determines that the first uplink control information need to be sent in the target time unit, and determines that the second uplink control information need to be sent in the target time unit. Wherein, the target time unit may be a slot, or may be a sub-frame, or other time unit.

In S320, The terminal transmits the second uplink control information by using the target time domain symbols in the first uplink control channel in target time unit.

Wherein, the target time domain symbols are at least some time domain symbols from among the time domain symbols, used for transmitting reference symbols, in the first uplink control channel.

Wherein, the time domain symbols used for transmitting the reference symbols in the first uplink control channel, refers to time domain symbols which may be used to send reference symbols when the first uplink control channel does not send the second uplink control information. In other words, in this time unit, when the second uplink control information is to be sent, the target time domain symbols in the first uplink control channel is used to send the second uplink control information, and when there is no second uplink control to be sent, the target time domain symbols in the first uplink control channel may be used to send the reference symbols.

The target time domain symbol is all or part of the time domain symbols used to transmit the reference symbols in the first uplink control channel.

It can be known from the above that the terminal may use the time domain symbols used for sending the reference symbols among the time domain symbols occupied by the first uplink control channel to send the second uplink control information, which may not only implement the purpose of sending the second uplink control information, but also make full use of resources to provide resource utilization.

In S330, the terminal uses time domain symbols, other than the time domain symbols for transmitting reference symbols, in the first uplink control channel to transmit the first uplink control information in the target time unit,.

In other words, when the terminal sends the second uplink control information by using the target time domain symbols in the first uplink control channel in target time unit, the terminal may further send the first uplink control information by suing the time domain symbols other than those originally used for transmitting the reference symbols in the first uplink control channel, so that the first uplink control information and the second uplink control information may be transmitted in the same uplink control channel of the same time unit.

In the communication method of the embodiment of the present disclosure, optionally, before the terminal using the target time domain symbols in the first uplink control channel to transmit the second uplink control information in the target time unit, the communication method further comprises at least one of the following steps. The terminal determines that the number of time domain symbols in the second uplink control channel is not greater than the number of time domain symbols, used for transmitting the reference symbols, in the first uplink control channel. The terminal determines that the number of resource units for transmitting the second uplink control channel is not greater than the number of resource units used for transmitting the reference symbols in the first uplink control channel. The terminal determines that a frequency domain bandwidth used for transmitting the second uplink control channel is not greater than the frequency domain bandwidth used for transmitting the first uplink control channel.

In other words, the terminal may use all or part of the time domain symbols, used for transmitting the reference symbols in the first uplink control channel, to transmit the second uplink control information, when it is determined that the second uplink control channel, originally used for transmitting the second uplink control information, satisfies at least one of the above conditions, thereby guaranteeing the reliability of communication.

In the communication method of the embodiment of the present disclosure, optionally, before the terminal using the target time domain symbols in the first uplink control channel to transmit the second uplink control information in the target time unit, the communication method further comprises that the terminal receives first configuration information transmitted by a network device, wherein the first configuration information indicates that the terminal supports transmitting the first uplink control information and the second uplink information in a same time unit.

In other words, the terminal transmits, when instructed by the network device, the second uplink control information and the first uplink control information in the same uplink control channel of the same time unit, thereby improving the reliability of communication.

In the communication method of the embodiment of the present disclosure, optionally, before the terminal using the target time domain symbols in the first uplink control channel to transmit the second uplink control information in the target time unit, the communication method further comprises that the terminal receiving second configuration information transmitted by the network device, wherein the second configuration information indicates that the terminal supports transmitting the second uplink control information by using the time domain symbols for transmitting the reference symbols.

In other words, the terminal transmits, when instructed by the network device, the first control channel information by using the time domain symbols, used for transmitting reference symbols, in the first uplink control channel, thereby improving the reliability rate of communication.

In the communication method of the embodiment of the present disclosure, optionally, a bandwidth of the target time domain symbols is not less than the bandwidth of other time domain symbols in the first uplink control channel. In other words, the terminal transmits the second uplink control information by using the time domain symbols with large bandwidth among the time domain symbols used for transmitting the reference symbols in the first uplink control information, which may further improve the reliability rate of communication.

In the communication method of the embodiment of the present disclosure, optionally, the terminal using, the target time domain symbols in the first uplink control channel to transmit the second uplink control information in the target time unit,, may comprise that the terminal determines, according to a position of the time domain symbols used for transmitting the second uplink control channel, a position of at least some time domain symbols from among the time domain symbols, used for transmitting reference symbols, in the first uplink control channel.

In other words, the terminal determines, according to the position of the time domain symbols in the second uplink control channel that may be used when the second uplink control information is individually transmitted, which of the time domain symbols of the first uplink control channel that are originally used to send the reference symbols is the target time domain symbols for sending the second uplink control information.

In the communication method of the embodiment of the present disclosure, optionally, it may further comprise that the terminal receiving third configuration information transmitted by the network device, wherein the third configuration information indicates the position of at least some time domain symbols from among the time domain symbols, used for transmitting reference symbols, in the first uplink control channel.

In other words, the terminal may determine, according to the indication of the network devices, which of the time domain symbols of the first uplink control channel that are originally used to send the reference symbols is the target time domain symbols for sending the second uplink control information. This not only improves the reliability of communication, but also improves the flexibility of communication.

In the communication method of the embodiment of the present disclosure, optionally, the terminal using the target time domain symbols in the first uplink control channel to transmit the second uplink control information in the target time unit, may comprise that the terminal determines, according to the information carried in the second uplink control information, a sequence that is transmitted on the target domain symbols, wherein sequences corresponding to different information carried in the second uplink control carrying information are different.

Usually, the network device may indicate that the terminal transmits the second uplink control information by suing the time domain symbols located at the end of the target time domain unit among the time domain symbols originally used for transmitting the reference symbols in the first uplink control channel.

In other words, when the information carried in the second uplink control information is different, the sequence on the target time domain symbols is different. In other words, the terminal may pre-configure the correspondence between the different content of the second uplink control information and the different sequence, and then the terminal may determine the sequence transmitted on the target time domain symbols according to the information carried by the second uplink control information. If the target time domain symbols are multiple, the target time domain symbols correspond to the sequence group.

In the communication method of the embodiment of the present disclosure, optionally, the terminal determining, according to the information carried in the second uplink control information, a sequence that is transmitted on the target domain symbols, may comprise that when the information carried by the second uplink control channel is all NACK, the terminal determines to transmit a first sequence on the target domain symbol in the first uplink control channel, wherein the first sequence is a sequence that is transmitted on the target time domain symbols when the terminal individually transmits the first uplink control information by using the first uplink control channel.

In other words, when the information of the second uplink control information pre-configured on the terminal is all NACK, the sequence corresponding to the target time domain symbols is the first sequence or the first sequence group when the target time domain symbols is used for transmitting the reference symbols. The first sequence or the first sequence group is a sequence that should be transmitted on the time domain symbols, when the time domain symbols originally used for transmitting the reference symbols in the first uplink control channel are actually used for transmitting the reference symbols.

In this way, under the circumstances that the network device sends the first downlink data channel and the second downlink data channel, even if the terminal loses the second downlink data channel, when the terminal only sends the first uplink control information by using the first uplink control information according to the method for transmitting the first uplink control information separately, the network device also can obtain that the terminal does not receive the information of the second downlink data channel according to the first sequence or the first sequence group on the target time domain symbols.

Optionally, if the second uplink control information carries 1 bit of ACK or NACK information, the target time domain symbols for transmitting the ACK may correspond to the second sequence of the second sequence group, and the target time domain symbols for transmitting the NACK may correspond to the first sequence of the first sequence group.

If the second uplink control information carries 2 bits of NACK and ACK information, the target time domain symbols may correspond to the third sequence of the third sequence group.

If the second uplink control information carries 2 bits of ACK and NACK information, the target time domain symbols may correspond to the fourth sequence of the fourth sequence group.

If the second uplink control information carries 2 bits of ACK and ACK information, the target time domain symbols may correspond to the fifth sequence of the fifth sequence group.

In the communication method of the embodiment of the present disclosure, optionally, each sequence has a number, and the sequence number may be configured by the terminal according to the resource number of the first uplink control channel.

Specifically, the terminal may configure the number of the first sequence or the first sequence group according to the resource number of the first uplink control channel, and the terminal may configure numbers of other sequences according to the number of the first sequence or the first sequence group and agreed offset value.

In this way, when the terminal sends the second uplink control information by using the target time domain symbols, the sequence transmitted on the target time domain symbols may be determined according to the content of the second uplink control information. Then, according to the order number of the sequence and the numbered correspondence corresponding to the above configuration, the resource number for transmitting the target time domain symbols may be determined, thereby determining the resource for transmitting the target time domain symbols.

As shown in fig. 4, when the terminal individually transmits the first uplink control information in the target time unit, the first uplink control channel is used. The first uplink control channel occupied 7 time domain symbols, wherein, the reference symbols are transmitted on the first time domain symbol and the last time domain symbol, and the first uplink control information is transmitted on the second to sixth time domain symbols.

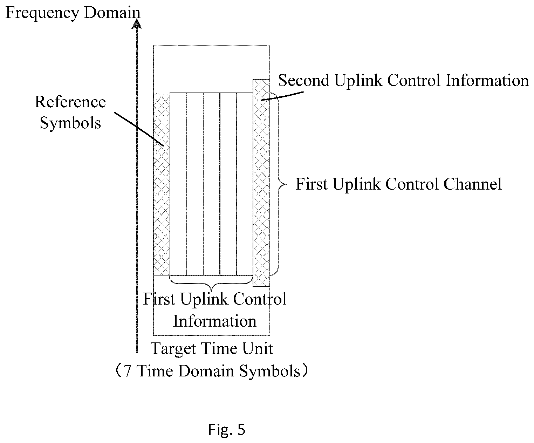

As shown in figure 5, when the terminal transmits the first uplink control information and the second uplink control information by using the first uplink control channel in the target time unit, the terminal transmits the second uplink control information on the time domain symbols at the end of the two symbols originally used for transmitting the reference symbols, and transmits the first uplink control information on the second to sixth time domain symbols.

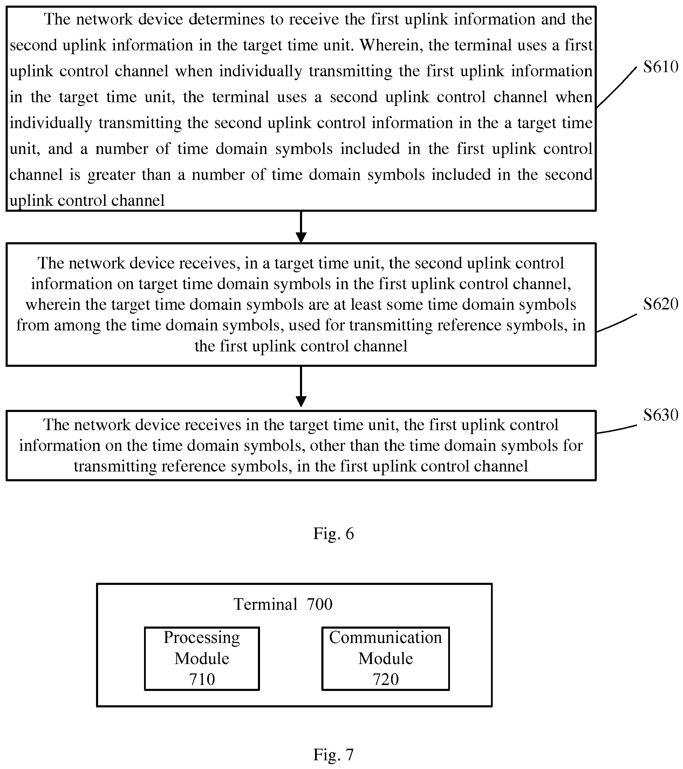

Fig. 6 is a flowchart diagram illustrating of the communication method in one embodiment of the present disclosure. It should be understood that fig. 6 shows the steps or operations of the communication method, but these steps or operations are merely examples, and the embodiments of the present disclosure may also execute other operations or variations of the operations in fig. 6. Moreover, the various steps in fig. 6 may be executed in a different order than that present in fig. 6, and it is possible that not all operations in fig. 6 are to be executed.

In S610, the network device determines to receive the first uplink information and the second uplink information in the target time unit.

Wherein, the terminal uses a first uplink control channel when individually transmitting the first uplink information in the target time unit, the terminal uses a second uplink control channel when individually transmitting the second uplink control information in the a target time unit, and a number of time domain symbols included in the first uplink control channel is greater than a number of time domain symbols included in the second uplink control channel.

In S620, the network device receives, in a target time unit, the second uplink control information on target time domain symbols in the first uplink control channel, wherein the target time domain symbols are at least some time domain symbols from among the time domain symbols, used for transmitting reference symbols, in the first uplink control channel.

In S630, the network device receives, in the target time unit, the first uplink control information on the time domain symbols, other than the time domain symbols for transmitting reference symbols, in the first uplink control channel.

The communication method may transmit the first uplink control information and the second uplink control information in the same time unit. Moreover, the second uplink control information is send by using the time domain symbols used for sending the reference symbols in the first uplink control channel, which may improve the utilization rate of resources.

In the communication method of the embodiment of the present disclosure, optionally, before the network device receiving the second uplink control information on the target time domain symbols in the first uplink control channel in a target time unit, the communication method may further comprise at least one of the following steps. The network device determines that the number of time domain symbols in the second uplink control channel is not greater than the number of time domain symbols, used for transmitting the reference symbols, in the first uplink control channel. The network device determines that the number of resource units for transmitting the second uplink control channel is not greater than the number of resource units used for transmitting the reference symbols in the first uplink control channel. The network device determines that a frequency domain bandwidth used for transmitting the second uplink control channel is not greater than the frequency domain bandwidth used for transmitting the first uplink control channel.

In the communication method of the embodiment of the present disclosure, optionally, before the network device receiving the second uplink control information on the target time domain symbols in the first uplink control channel in a target time unit, the communication method may further comprise that the network device transmits first configuration information to a terminal, wherein the first configuration information is used for indicating that the terminal supports transmitting the first uplink control information and the second uplink information in a same time unit.

In the communication method of the embodiment of the present disclosure, optionally, before the network device receiving the second uplink control information on the target time domain symbols in the first uplink control channel in a target time unit, the communication method may further comprise that the network device transmits second configuration information to the terminal, wherein the second configuration information is used for indicating that the terminal supports transmitting the second uplink control information by using the time domain symbols for transmitting the reference symbols.

In the communication method of the embodiment of the present disclosure, optionally, a bandwidth of the target time domain symbols is not less than the bandwidth of other time domain symbols in the first uplink control channel.

In the communication method of the embodiment of the present disclosure, optionally, the network device receiving the second uplink control information on the target time domain symbols in the first uplink control channel in a target time unit, may comprise that the network device determines, according to a position of the time domain symbols used for transmitting the second uplink control channel, a position of at least some time domain symbols from among the time domain symbols, used for transmitting reference symbols, in the first uplink control channel.

In the communication method of the embodiment of the present disclosure, optionally, the communication method may further comprise that the network device transmits third configuration information to the terminal, wherein the third configuration information is used for indicating the position of at least some time domain symbols from among the time domain symbols, used for transmitting reference symbols, in the first uplink control channel.

In the communication method of the embodiment of the present disclosure, optionally, the network device receiving the second uplink control information on the target time domain symbols in the first uplink control channel in a target time unit, may comprise that the network device determines, according to a sequence on the target domain symbols, the information carried in the second uplink control information, wherein sequences corresponding to different information carried in the second uplink control information are different.

In the communication method of the embodiment of the present disclosure, optionally, the network device determining, according to a sequence on the target domain symbols, the information carried in the second uplink control information, may comprise that when the sequence on the target domain symbol is a first sequence, the network device determines that the information carried by the second uplink control channel is all NACK, wherein the first sequence is a sequence that is transmitted on the target time domain symbols when the terminal individually transmits the first uplink control information by using the first uplink control channel. This implementation may improve the reliability of communication.

In the communication method of the embodiment of the present disclosure, optionally, the order number of the sequence is determined by the terminal according to the order number of the first uplink control channel.

It should be understood that, the network device in the communication method shown in fig. 6 may be the network device in the communication method shown in fig. 3. That is, the technical features of the network device in the communication method shown in fig. 3 are also applicable to the network device in the communication method shown in fig. 6. For the sake of brevity, it will not be repeated here.

Fig. 7 is a structure diagram illustrating of the terminal of one embodiment of the present disclosure. It should be understood that the terminal 700 shown in fig.7 is only an example, and the terminal in the embodiment of the present disclosure may further include other modules or units, or include modules similar in function to the various modules in fig.7, or not all the modules in fig. 7 are included.

A processing module 710 is configured to determine the transmission of first uplink control information and second uplink control information in a target time unit, wherein the terminal uses a first uplink control channel when individually transmitting the first uplink information in the target time unit, the terminal uses a second uplink control channel when individually transmitting the second uplink control information in the a target time unit, and a number of time domain symbols included in the first uplink control channel is greater than a number of time domain symbols included in the second uplink control channel.

A communication module 720 is configured to transmit, in a target time unit, the second uplink control information by using target time domain symbols in the first uplink control channel, wherein the target time domain symbols are at least some time domain symbols from among the time domain symbols, used for transmitting reference symbols, in the first uplink control channel;

Wherein the communication module 720 is further configured to transmit, in the target time unit, the first uplink control information by using time domain symbols, other than the time domain symbols for transmitting reference symbols, in the first uplink control channel.

The terminal may transmit the first uplink control information and the second uplink control information in the same time unit. Moreover, the second uplink control information is send by using the time domain symbols used for sending the reference symbols in the first uplink control channel, which may improve the utilization rate of resources.

Optionally, the communication module transmitting, in the target time unit, the second uplink control information by using target time domain symbols in the first uplink control channel, the processing module is further configured to perform at least one of the following steps: determining that the number of time domain symbols in the second uplink control channel is not greater than the number of time domain symbols, used for transmitting the reference symbols, in the first uplink control channel; determining that the number of resource units for transmitting the second uplink control channel is not greater than the number of resource units used for transmitting the reference symbols in the first uplink control channel; determining that a frequency domain bandwidth used for transmitting the second uplink control channel is not greater than the frequency domain bandwidth used for transmitting the first uplink control channel.

Optionally, before the communication module transmitting, in the target time unit, the second uplink control information by using target time domain symbols in the first uplink control channel, the communication module is further configured to receive first configuration information transmitted by a network device, wherein the first configuration information is used for indicating that the terminal supports transmitting the first uplink control information and the second uplink information in a same time unit.

Optionally, before the communication module transmitting, in the target time unit, the second uplink control information by using target time domain symbols in the first uplink control channel, the communication module is further configured to receive second configuration information transmitted by the network device, and the second configuration information indicates that the terminal supports transmitting the second uplink control information by using the time domain symbols for transmitting the reference symbols.

Optionally, a bandwidth of the target time domain symbols is not less than the bandwidth of other time domain symbols in the first uplink control channel.

Optionally, the communication module is configured to determine, according to a position of the time domain symbols used for transmitting the second uplink control channel, a position of at least some time domain symbols from among the time domain symbols, used for transmitting reference symbols, in the first uplink control channel.

Optionally, the communication module is further configured to receive third configuration information transmitted by the network device, wherein the third configuration information indicates the position of at least some time domain symbols from among the time domain symbols, used for transmitting reference symbols, in the first uplink control channel.

Optionally, the communication module is configured to determine, according to the information carried in the second uplink control information, a sequence that is transmitted on the target domain symbols, wherein sequences corresponding to different information carried in the second uplink control information are different.

Optionally, the communication module is configured to determine, when the information carried by the second uplink control channel is all NACK, the transmission of a first sequence on the target domain symbol in the first uplink control channel, wherein the first sequence is a sequence that is transmitted on the target time domain symbols when the terminal individually transmits the first uplink control information by using the first uplink control channel.

Optionally, the order number of the sequence is determined by the terminal according to the order number of the first uplink control channel.

It should be understood that, the foregoing and other operations and /or functions of the various units of the terminal in the embodiment of the present disclosure units are shown in fig. 7 for implementing the corresponding flow of the communication method in fig. 4. For the sake of brevity, it will not be repeated here.

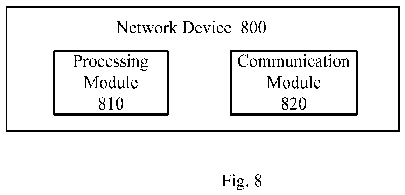

Fig. 8 is a structure diagram illustrating of the network device of an embodiment of the present disclosure. It should understood that that the network device 800 shown in fig.8 is only an example, and the network device in the embodiment of the present disclosure may further include other modules or units, or include modules similar in function to the various modules in fig.8, or not all the modules in fig. 8 are included.

A processing module 810 is configured to determine the transmission of first uplink control information and second uplink control information in a target time unit, wherein a terminal uses a first uplink control channel when individually transmitting the first uplink information in the target time unit, the terminal uses a second uplink control channel when individually transmitting the second uplink control information in the a target time unit, and a number of time domain symbols included in the first uplink control channel is greater than a number of time domain symbols included in the second uplink control channel.

A communication module 820 is configured to receive, in a target time unit, the second uplink control information on target time domain symbols in the first uplink control channel, wherein the target time domain symbols are at least some time domain symbols from among the time domain symbols, used for transmitting reference symbols, in the first uplink control channel.

The communication module 820 is further configured to receive, in the target time unit, the first uplink control information on time domain symbols, other than the time domain symbols for transmitting reference symbols, in the first uplink control channel.

The network device may transmit the first uplink control information and the second uplink control information in the same time unit. Moreover, the second uplink control information is send by using the time domain symbols used for sending the reference symbols in the first uplink control channel, which may improve the utilization rate of resources.

Optionally, before the communication module receiving, in the target time unit, the second uplink control information on the target time domain symbols in the first uplink control channel, the processing module is further configured to perform at least one of the following steps: determining that the number of time domain symbols in the second uplink control channel is not greater than the number of time domain symbols, used for transmitting the reference symbols, in the first uplink control channel; determining that the number of resource units for transmitting the second uplink control channel is not greater than the number of resource units used for transmitting the reference symbols in the first uplink control channel; determining that a frequency domain bandwidth used for transmitting the second uplink control channel is not greater than the frequency domain bandwidth used for transmitting the first uplink control channel.

Optionally, before the communication module receiving, in the target time unit, the second uplink control information on the target time domain symbols in the first uplink control channel, the communication module is further configured to transmit first configuration information to the terminal, wherein the first configuration information indicates that the terminal supports transmitting the first uplink control information and the second uplink information in a same time unit.

Optionally, before the communication module receiving, in the target time unit, the second uplink control information on the target time domain symbols in the first uplink control channel, the communication module is further configured to transmit second configuration information to the terminal, wherein the second configuration information indicates that the terminal supports transmitting the second uplink control information by using the time domain symbols for transmitting the reference symbols.

Optionally, a bandwidth of the target time domain symbols is not less than the bandwidth of other time domain symbols in the first uplink control channel.

Optionally, the communication module is configured to determine, according to a position of the time domain symbols used for transmitting the second uplink control channel, a position of at least some time domain symbols from among the time domain symbols, used for transmitting reference symbols, in the first uplink control channel.

Optionally, the communication module is further configured to transmit third configuration information to the terminal, wherein the third configuration information is used for indicating the position of at least some time domain symbols from among the time domain symbols, used for transmitting reference symbols, in the first uplink control channel.

Optionally, the communication module is configured to determine, according to a sequence on the target domain symbols, the information carried in the second uplink control information, wherein sequences corresponding to different information carried in the second uplink control information are different.

Optionally, the communication module is configured to determine, when the sequence on the target domain symbol is a first sequence, the information carried by the second uplink control channel is all NACK, wherein the first sequence is a sequence that is transmitted on the target time domain symbols when the terminal individually transmits the first uplink control information by using the first uplink control channel.

Optionally, the order number of the sequence is determined by the terminal according to the order number of the first uplink control channel.

It should be understood that, the foregoing and other operations and /or functions of the various units of the network device in the embodiment of the present disclosure units are shown in fig. 8 for implementing the corresponding flow of the communication method in fig. 6. For the sake of brevity, it will not be repeated here.

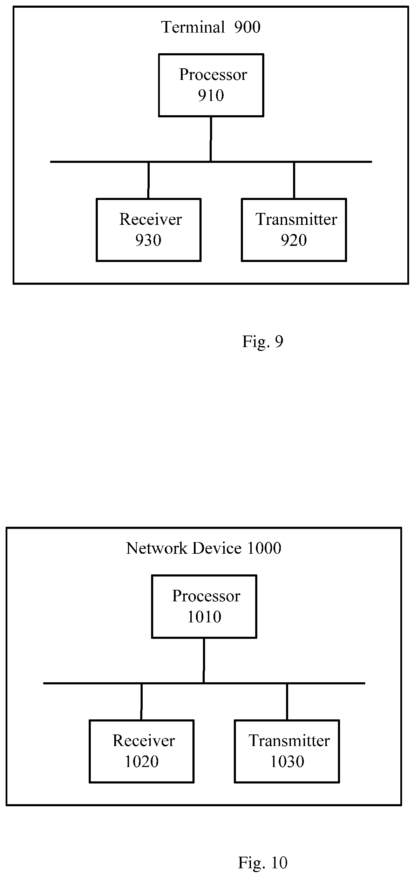

Fig. 9 is a structure diagram illustrating of the terminal of an embodiment of the present disclosure. It should understood that that the terminal 900 shown in fig.9 is only an example, and the terminal in the embodiment of the present disclosure may further include other modules or units, or include modules similar in function to the various modules in fig.9, or not all the modules in fig. 9 are included.

Wherein, the processor 910 may be used for implementing the operations or the steps that the processing module 710 in fig. 7 may implement. The transmitter 920 may be used for implementing partial operations or steps that the communication module 720 in fig. 7 may implement. The receiver 930 may be used for implementing g partial operations or steps that the communication module 720 in fig. 7 may implement. For the sake of brevity, it will not be repeated here.

Fig. 10 is a structure diagram illustrating of the network device of an embodiment of the present disclosure. It should be understood that the network device 1000 shown in fig. 10 is only an example, and the network device in the embodiment of the present disclosure may further include other modules or units, or include modules similar in function to the various modules in fig. 10, or not all the modules in fig. 10 are included.

Wherein, the processor 1010 may be used for implementing the operations or the steps that the processing module 810 in fig. 8 may implement. The receiver 1020 may be used for implementing partial operations or steps that the communication module 820 in fig. 8 may implement. The transmitter 1030 may be used for implementing partial operations or steps that the communication module 820 in fig. 8 may implement. For the sake of brevity, it will not be repeated here.

Those ordinary skilled in the art should be appreciated that, the units and algorithm steps described in conjunction with the embodiments disclosed by the present disclosure can be implemented in electronic hardware, computer software or a combination of computer software and electronic hardware. Whether these functions are to be performed in the form of hardware or software is depending on specific applications and constraint conditions for design of the technical solutions. Those ordinary skilled in the art can use different method for each of the specific applications so as to achieve the described functions, but such implementation should not be considered as going beyond the scope of the present disclosure.

Those skilled pertaining to the art will be clearly appreciated that, in order for convenience and concision of explanation, particular working processes of the system(s), device(s) and unit(s) described above can be referred to corresponding processes in the foregoing embodiments of the transmission method without repeating herein.

In several embodiments provided by the present disclosure, it should be understood that, the revealed system(s), device(s) and method(s) can be implemented in other ways. For example, the foregoing embodiments of the transmission method are merely illustrative. For example, the partition of the units merely is a partition in terms of logic functions, and there can be other partitions in practical implementation. For example, multiple units or components can be combined or integrated into another system, or some features can be omitted or may not be performed. Furthermore, the terms "coupling", "direct coupling" or "communication connection" as revealed or discussed between objects can be indirect coupling or communication connection through several ports, devices or units, and can also be electric connection, mechanic connection or other forms of connection.

The units described as separate parts may or may not be separated physically. The part present as a unit may or may not be a physical unit, that is, it can be located in a single position or can be distributed in multiple network units. Part or all of the units can be selected according to actual demands, so as to achieve the objective of the technical solutions of the present disclosure.

Furthermore, the functional units in the embodiments of the present disclosure can be integrated in a single processing unit, and can also be present separately and physically, and can also be the case where two or more than two units are integrated in one unit.

The function, when implemented in a form of software functional unit and marketed or used as an independent product, can be stored in a computer-readable storage medium. Based on such understanding, the essence of the technical solutions of the present disclosure or a part of the technical solutions contributing to the existing technology, or all of or part of the technical solutions can be embodied in a form of software product. The software product is stored in a storage medium, including several instructions to cause a computer device (the computer device can be a personal computer, a server or a network device) to perform all or part of the steps of the transmission method described in the embodiments of the present disclosure. Furthermore, the foregoing storage medium includes various types of mediums which can store program codes, for example, USB flash disk, mobile Hard Disk Drive (HDD), Read-Only Memory (ROM), Random Access Memory (RAM), magnetic disk, optical disk and the like.

The above are merely specific implementations of the present disclosure without limiting the protection scope of the present disclosure thereto. Within the technical scope revealed in the present disclosure, modification(s) or substitution(s) may be easily conceivable for those skilled who are familiar with the present technical field. Therefore the protection scope of the present disclosure should be based on the protection scope of the appended claims.

## Claims

1. A communication method, comprising:
determining (S310), by a terminal (120, 700, 900), to transmit first uplink control information and second uplink control information in a target time unit, wherein the terminal (120, 700, 900) uses a first uplink control channel when individually transmitting the first uplink information in the target time unit, and the terminal (120, 700, 900) uses a second uplink control channel when individually transmitting the second uplink control information in the a target time unit, and a number of time domain symbols included in the first uplink control channel is greater than a number of time domain symbols included in the second uplink control channel;
using (S320), by the terminal (120, 700, 900), target time domain symbols in the first uplink control channel to transmit the second uplink control information in the target time unit, wherein the target time domain symbols are at least some time domain symbols from among the time domain symbols used for transmitting reference symbols in the first uplink control channel;
using (S330), by the terminal (120, 700, 900), time domain symbols, other than the time domain symbols for transmitting reference symbols in the first uplink control channel to transmit the first uplink control information in the target time unit.

2. The communication method according to claim 1, wherein before using (S320), by the terminal (120, 700, 900), target time domain symbols in the first uplink control channel to transmit the second uplink control information in the target time unit, the communication method further comprises at least one of the following steps:
determining, by the terminal (120, 700, 900), that the number of time domain symbols in the second uplink control channel is not greater than the number of time domain symbols used for transmitting the reference symbols in the first uplink control channel;
determining, by the terminal (120, 700, 900), that the number of resource units for transmitting the second uplink control channel is not greater than the number of resource units used for transmitting the reference symbols in the first uplink control channel;
determining, by the terminal (120, 700, 900), that a frequency domain bandwidth used for transmitting the second uplink control channel is not greater than the frequency domain bandwidth used for transmitting the first uplink control channel.

3. The communication method according to claim 1 or 2, wherein before using (S320), by the terminal (120, 700, 900), target time domain symbols in the first uplink control channel to transmit the second uplink control information in the target time unit, the communication method further comprises:
receiving, the terminal (120, 700, 900), first configuration information transmitted by a network device, wherein the first configuration information is used for indicating that the terminal (120, 700, 900) supports transmitting the first uplink control information and the second uplink information in a same time unit.

4. The communication method according to any one of claims 1 to 3, wherein before using (S320), by the terminal (120, 700, 900), target time domain symbols in the first uplink control channel to transmit the second uplink control information in the target time unit, the communication method further comprises:
receiving, the terminal (120, 700, 900), second configuration information transmitted by the network device, wherein the second configuration information is used for indicating that the terminal (120, 700, 900) supports transmitting the second uplink control information by using the time domain symbols for transmitting the reference symbols.

5. The communication method according to any one of claims 1 to 4, wherein a bandwidth of the target time domain symbols is not less than the bandwidth of other time domain symbols in the first uplink control channel.

6. The communication method according to any one of claims 1 to 5, wherein using (S320), by the terminal (120, 700, 900), target time domain symbols in the first uplink control channel to transmit the second uplink control information in a target time unit, comprises:
determining, the terminal (120, 700, 900), according to a position of the time domain symbols used for transmitting the second uplink control channel, a position of at least some time domain symbols from among the time domain symbols, used for transmitting reference symbols, in the first uplink control channel.

7. The communication method according to any one of claims 1 to 5, further comprising:
receiving, by the terminal (120, 700, 900), third configuration information transmitted by the network device, wherein the third configuration information is used for indicating the position of at least some time domain symbols from among the time domain symbols used for transmitting reference symbols in the first uplink control channel.

8. The communication method according to any one of claims 1 to 7, wherein using (S320), by the terminal (120, 700, 900), target time domain symbols in the first uplink control channel to transmit the second uplink control information in the target time unit, comprises:
determining, by the terminal (120, 700, 900), according to the information carried in the second uplink control information, a sequence that is transmitted on the target time domain symbols, wherein sequences corresponding to different information carried in the second uplink control information are different.

9. The communication method according to claim 8, wherein determining, by the terminal (120, 700, 900), according to the information carried in the second uplink control channel, the sequence that is transmitted on the target time domain symbols, comprises:
when the information carried by the second uplink control channel is all negative acknowledgement, determining, the terminal (120, 700, 900), to transmit a first sequence on the target time domain symbol in the first uplink control channel, wherein the first sequence is a sequence that is transmitted on the target time domain symbols when the terminal (120, 700, 900) individually transmits the first uplink control information by using the first uplink control channel.

10. The communication method according to claim 8, wherein an order number of the sequence is determined by the terminal (120, 700, 900) according to an order number of the first uplink control channel.

11. A terminal (120, 700, 900), comprising:
a processing module (710), configured to determine the transmission of first uplink control information and second uplink control information in a target time unit, wherein the terminal (120, 700, 900) uses a first uplink control channel when individually transmitting the first uplink information in the target time unit, and the terminal (120, 700, 900) uses a second uplink control channel when individually transmitting the second uplink control information in the a target time unit, and a number of time domain symbols included in the first uplink control channel is greater than a number of time domain symbols included in the second uplink control channel;
a communication module (720), configured to transmit, in the target time unit, the second uplink control information by using target time domain symbols in the first uplink control channel, wherein the target time domain symbols are at least some time domain symbols from among the time domain symbols, used for transmitting reference symbols, in the first uplink control channel;
wherein the communication module (720) is further configured to transmit, in the target time unit, the first uplink control information by using time domain symbols, other than the time domain symbols for transmitting reference symbols, in the first uplink control channel.

12. The terminal (120, 700, 900) according to claim 11, wherein before the communication module (720) transmitting, in the target time unit, the second uplink control information by using target time domain symbols in the first uplink control channel, the processing module (710) is further configured to perform at least one of the following steps:
determining that the number of time domain symbols in the second uplink control channel is not greater than the number of time domain symbols used for transmitting the reference symbols in the first uplink control channel;
determining that the number of resource units for transmitting the second uplink control channel is not greater than the number of resource units used for transmitting the reference symbols in the first uplink control channel;
determining that a frequency domain bandwidth used for transmitting the second uplink control channel is not greater than the frequency domain bandwidth used for transmitting the first uplink control channel.

13. The terminal (120, 700, 900) according to claim 11 or 12, wherein before the communication module (720) transmitting, in the target time unit, the second uplink control information by using target time domain symbols in the first uplink control channel, the communication module (720) is further configured to receive first configuration information transmitted by a network device, the first configuration information indicating that the terminal (120, 700, 900) supports transmitting the first uplink control information and the second uplink information in a same time unit.

14. The terminal (120, 700, 900) according to any one of claims 11 to 13, wherein, before the communication module (720) transmitting, in the target time unit, the second uplink control information by using target time domain symbols in the first uplink control channel, the communication module (720) is further configured to receive second configuration information transmitted by the network device, the second configuration information indicating that the terminal (120, 700, 900) supports transmitting the second uplink control information by using the time domain symbols for transmitting the reference symbols.

15. The terminal (120, 700, 900) according to any one of claims 11 to 14, wherein a bandwidth of the target time domain symbols is not less than the bandwidth of other time domain symbols in the first uplink control channel.

16. The terminal (120, 700, 900) according to any one of claims 11 to 15, wherein the communication module (720) is configured to determine, according to a position of the time domain symbols used for transmitting the second uplink control channel, a position of at least some time domain symbols from among the time domain symbols used for transmitting reference symbols in the first uplink control channel.

17. The terminal (120, 700, 900) according to any one of claims 11 to 15, wherein the communication module (720) is further configured to receive third configuration information transmitted by the network device, the third configuration information indicating the position of at least some time domain symbols from among the time domain symbols used for transmitting reference symbols in the first uplink control channel.

18. The terminal (120, 700, 900) according to any one of claims 11 to 17, wherein the communication module (720) is configured to determine, according to the information carried in the second uplink control information, a sequence that is transmitted on the target time domain symbols, wherein sequences corresponding to different information carried in the second uplink control information are different.

19. The terminal (120, 700, 900) according to claim 18, wherein the communication module (720) is configured to determine, when the information carried by the second uplink control channel is all negative acknowledgement, the transmission of a first sequence on the target time domain symbol in the first uplink control channel, wherein the first sequence is a sequence that is transmitted on the target time domain symbols when the terminal (120, 700, 900) individually transmits the first uplink control information by using the first uplink control channel.

20. The terminal (120, 700, 900) according to claim 18, wherein an order number of the sequence is determined by the terminal (120, 700, 900) according to an order number of the first uplink control channel.

## Patentansprüche

1. Kommunikationsverfahren, das umfasst, dass:
durch ein Endgerät (120, 700, 900) bestimmt (S310) wird, dass erste Uplink-Steuerinformationen und zweite Uplink-Steuerinformationen in einer Zielzeiteinheit übertragen werden sollen, wobei das Endgerät (120, 700, 900) einen ersten Uplink-Steuerkanal verwendet, wenn es die ersten Uplink-Informationen in der Zielzeiteinheit einzeln überträgt, und das Endgerät (120, 700, 900) einen zweiten Uplink-Steuerkanal verwendet, wenn es die zweiten Uplink-Steuerinformationen in der Zielzeiteinheit einzeln überträgt, und wobei eine Anzahl von Zeitbereichssymbolen, die in dem ersten Uplink-Steuerkanal enthalten sind, größer ist als eine Anzahl von Zeitbereichssymbolen, die in dem zweiten Uplink-Steuerkanal enthalten sind;
durch das Endgerät (120, 700, 900) Zielzeitbereichssymbole in dem ersten Uplink-Steuerkanal verwendet werden (S320), um die zweiten Uplink-Steuerinformationen in der Zielzeiteinheit zu übertragen, wobei die Zielzeitbereichssymbole zumindest einige Zeitbereichssymbole aus den Zeitbereichssymbolen sind, die zum Übertragen von Referenzsymbolen in dem ersten Uplink-Steuerkanal verwendet werden;
durch das Endgerät (120, 700, 900) Zeitbereichssymbole verwendet werden (S330), die nicht die Zeitbereichssymbole zum Übertragen von Referenzsymbolen in dem ersten Uplink-Steuerkanal sind, um die ersten Uplink-Steuerinformationen in der Zielzeiteinheit zu übertragen.

2. Kommunikationsverfahren nach Anspruch 1, wobei das Kommunikationsverfahren vor der Verwendung (S320) von Zielzeitbereichssymbolen in dem ersten Uplink-Steuerkanal zum Übertragen der zweiten Uplink-Steuerinformationen durch das Endgerät (120, 700, 900) in der Zielzeiteinheit ferner mindestens einen der folgenden Schritte umfasst:
Bestimmen durch das Endgerät (120, 700, 900), dass die Anzahl von Zeitbereichssymbolen in dem zweiten Uplink-Steuerkanal nicht größer ist als die Anzahl von Zeitbereichssymbolen, die für das Übertragen der Referenzsymbole in dem ersten Uplink-Steuerkanal verwendet werden;
Bestimmen durch das Endgerät (120, 700, 900), dass die Anzahl von Ressourceneinheiten zum Übertragen des zweiten Uplink-Steuerkanals nicht größer ist als die Anzahl von Ressourceneinheiten, die zum Übertragen der Referenzsymbole in dem ersten Uplink-Steuerkanal verwendet werden;
Bestimmen durch das Endgerät (120, 700, 900), dass eine Frequenzbereichsbandbreite, die zum Übertragen des zweiten Uplink-Steuerkanals verwendet wird, nicht größer ist als die Frequenzbereichsbandbreite, die zum Übertragen des ersten Uplink-Steuerkanals verwendet wird.

3. Kommunikationsverfahren nach Anspruch 1 oder 2, wobei das Kommunikationsverfahren vor der Verwendung (S320) von Zielzeitbereichssymbolen in dem ersten Uplink-Steuerkanal zum Übertragen der zweiten Uplink-Steuerinformationen durch das Endgerät (120, 700, 900) in der Zielzeiteinheit ferner umfasst:
Empfangen, durch das Endgerät (120, 700, 900), von ersten Konfigurationsinformationen, die von einer Netzwerkvorrichtung übertragen werden, wobei die ersten Konfigurationsinformationen zum Anzeigen verwendet werden, dass das Endgerät (120, 700, 900) das Übertragen der ersten Uplink-Steuerinformationen und der zweiten Uplink-Informationen in einer gleichen Zeiteinheit unterstützt.

4. Kommunikationsverfahren nach einem der Ansprüche 1 bis 3, wobei das Kommunikationsverfahren vor dem Verwenden (S320) von Zielzeitbereichssymbolen in dem ersten Uplink-Steuerkanal zum Übertragen der zweiten Uplink-Steuerinformationen durch das Endgerät (120, 700, 900) in der Zielzeiteinheit ferner umfasst:
Empfangen von zweiten Konfigurationsinformationen, die von der Netzwerkvorrichtung übertragen werden, durch das Endgerät (120, 700, 900), wobei die zweiten Konfigurationsinformationen zum Anzeigen verwendet werden, dass das Endgerät (120, 700, 900) das Übertragen der zweiten Uplink-Steuerinformationen unterstützt, indem die Zeitbereichssymbole zum Übertragen der Referenzsymbole verwendet werden.

5. Kommunikationsverfahren nach einem der Ansprüche 1 bis 4, wobei eine Bandbreite der Zielzeitbereichssymbole nicht geringer ist als die Bandbreite anderer Zeitbereichssymbole in dem ersten Uplink-Steuerkanal.

6. Kommunikationsverfahren nach einem der Ansprüche 1 bis 5, wobei das Verwenden (S320) von Zielzeitbereichssymbolen in dem ersten Uplink-Steuerkanal durch das Endgerät (120, 700, 900), um die zweiten Uplink-Steuerinformationen in einer Zielzeiteinheit zu übertragen, umfasst:
Bestimmen gemäß einer Position der Zeitbereichssymbole, die zum Übertragen des zweiten Uplink-Steuerkanals verwendet werden, einer Position von zumindest einigen Zeitbereichssymbolen aus den Zeitbereichssymbolen, die zum Übertragen von Referenzsymbolen verwendet werden, in dem ersten Uplink-Steuerkanal durch das Endgerät (120, 700, 900).

7. Kommunikationsverfahren nach einem der Ansprüche 1 bis 5, das ferner umfasst:
Empfangen von dritten Konfigurationsinformationen, die von der Netzwerkvorrichtung übertragen werden, durch das Endgerät (120, 700, 900), wobei die dritten Konfigurationsinformationen zum Anzeigen der Position von zumindest einigen Zeitbereichssymbolen aus den Zeitbereichssymbolen verwendet werden, die zum Übertragen von Referenzsymbolen in dem ersten Uplink-Steuerkanal verwendet werden.

8. Kommunikationsverfahren nach einem der Ansprüche 1 bis 7, wobei das Verwenden (S320) von Zielzeitbereichssymbolen in dem ersten Uplink-Steuerkanal durch das Endgerät (120, 700, 900), um die zweiten Uplink-Steuerinformationen in der Zielzeiteinheit zu übertragen, umfasst:
Bestimmen, durch das Endgerät (120, 700, 900), gemäß den in den zweiten Uplink-Steuerinformationen getragenen Informationen, einer Sequenz, die auf den Zielzeitbereichssymbolen übertragen wird, wobei Sequenzen, die unterschiedlichen in den zweiten Uplink-Steuerinformationen getragenen Informationen entsprechen, unterschiedlich sind.

9. Kommunikationsverfahren nach Anspruch 8, wobei das Bestimmen durch das Endgerät (120, 700, 900) der Sequenz gemäß den in dem zweiten Uplink-Steuerkanal getragenen Informationen, die auf den Zielzeitbereichssymbolen übertragen wird, umfasst:
wenn die von dem zweiten Uplink-Steuerkanal getragenen Informationen alle negative Quittungen sind, Bestimmen durch das Endgerät (120, 700, 900), dass eine erste Sequenz auf dem Zielzeitbereichssymbol in dem ersten Uplink-Steuerkanal übertragen werden soll, wobei die erste Sequenz eine Sequenz ist, die auf den Zielzeitbereichssymbolen übertragen wird, wenn das Endgerät (120, 700, 900) die ersten Uplink-Steuerinformationen unter Verwendung des ersten Uplink-Steuerkanals einzeln überträgt.

10. Kommunikationsverfahren nach Anspruch 8, wobei eine Ordnungsnummer der Sequenz durch das Endgerät (120, 700, 900) gemäß einer Ordnungsnummer des ersten Uplink-Steuerkanals bestimmt wird.

11. Endgerät (120, 700, 900), umfassend:
ein Verarbeitungsmodul (710), das konfiguriert ist, um das Übertragen von ersten Uplink-Steuerinformationen und zweiten Uplink-Steuerinformationen in einer Zielzeiteinheit zu bestimmen, wobei das Endgerät (120, 700, 900) einen ersten Uplink-Steuerkanal verwendet, wenn es die ersten Uplink-Informationen in der Zielzeiteinheit einzeln überträgt, und das Endgerät (120, 700, 900) einen zweiten Uplink-Steuerkanal verwendet, wenn es die zweiten Uplink-Steuerinformationen in der Zielzeiteinheit einzeln überträgt, und eine Anzahl von Zeitbereichssymbolen, die in dem ersten Uplink-Steuerkanal enthalten sind, größer ist als eine Anzahl von Zeitbereichssymbolen, die in dem zweiten Uplink-Steuerkanal enthalten sind;
ein Kommunikationsmodul (720), das konfiguriert ist, um in der Zielzeiteinheit die zweiten Uplink-Steuerinformationen unter Verwendung von Zielzeitbereichssymbolen in dem ersten Uplink-Steuerkanal zu übertragen, wobei die Zielzeitbereichssymbole zumindest einige Zeitbereichssymbole aus den Zeitbereichssymbolen sind, die zum Übertragen von Referenzsymbolen in dem ersten Uplink-Steuerkanal verwendet werden;
wobei das Kommunikationsmodul (720) ferner konfiguriert ist, um in der Zielzeiteinheit die ersten Uplink-Steuerinformationen unter Verwendung von Zeitbereichssymbolen, die sich von den Zeitbereichssymbolen zum Übertragen von Referenzsymbolen unterscheiden, in dem ersten Uplink-Steuerkanal zu übertragen.

12. Endgerät (120, 700, 900) nach Anspruch 11, wobei das Verarbeitungsmodul (710), bevor das Kommunikationsmodul (720) in der Zielzeiteinheit die zweiten Uplink-Steuerinformationen unter Verwendung von Zielzeitbereichssymbolen in dem ersten Uplink-Steuerkanal überträgt, ferner konfiguriert ist, um mindestens einen der folgenden Schritte durchzuführen:
Bestimmen, dass die Anzahl von Zeitbereichssymbolen in dem zweiten Uplink-Steuerkanal nicht größer ist als die Anzahl von Zeitbereichssymbolen, die zum Übertragen der Referenzsymbole in dem ersten Uplink-Steuerkanal verwendet werden;
Bestimmen, dass die Anzahl von Ressourceneinheiten zum Übertragen des zweiten Uplink-Steuerkanals nicht größer ist als die Anzahl von Ressourceneinheiten, die zum Übertragen der Referenzsymbole in dem ersten Uplink-Steuerkanal verwendet werden;
Bestimmen, dass eine Frequenzbereichsbandbreite, die zum Übertragen des zweiten Uplink-Steuerkanals verwendet wird, nicht größer ist als die Frequenzbereichsbandbreite, die zum Übertragen des ersten Uplink-Steuerkanals verwendet wird.

13. Endgerät (120, 700, 900) nach Anspruch 11 oder 12, wobei, bevor das Kommunikationsmodul (720) in der Zielzeiteinheit die zweiten Uplink-Steuerinformationen unter Verwendung von Zielzeitbereichssymbolen in dem ersten Uplink-Steuerkanal überträgt, das Kommunikationsmodul (720) ferner konfiguriert ist, um erste Konfigurationsinformationen zu empfangen, die von einer Netzwerkvorrichtung übertragen werden, wobei die ersten Konfigurationsinformationen anzeigen, dass das Endgerät (120, 700, 900) das Übertragen der ersten Uplink-Steuerinformationen und der zweiten Uplink-Informationen in einer gleichen Zeiteinheit unterstützt.

14. Endgerät (120, 700, 900) nach einem der Ansprüche 11 bis 13, wobei, bevor das Kommunikationsmodul (720) in der Zielzeiteinheit die zweiten Uplink-Steuerinformationen unter Verwendung von Zielzeitbereichssymbolen in dem ersten Uplink-Steuerkanal überträgt, das Kommunikationsmodul (720) ferner konfiguriert ist, um zweite Konfigurationsinformationen zu empfangen, die von der Netzwerkvorrichtung übertragen werden, wobei die zweiten Konfigurationsinformationen anzeigen, dass das Endgerät (120, 700, 900) das Übertragen der zweiten Uplink-Steuerinformationen unter Verwendung der Zeitbereichssymbole zum Übertragen der Referenzsymbole unterstützt.

15. Endgerät (120, 700, 900) nach einem der Ansprüche 11 bis 14, wobei eine Bandbreite der Zielzeitbereichssymbole nicht geringer ist als die Bandbreite anderer Zeitbereichssymbole in dem ersten Uplink-Steuerkanal.

16. Endgerät (120, 700, 900) nach einem der Ansprüche 11 bis 15, wobei das Kommunikationsmodul (720) konfiguriert ist, um entsprechend einer Position der Zeitbereichssymbole, die zum Übertragen des zweiten Uplink-Steuerkanals verwendet werden, eine Position von zumindest einigen Zeitbereichssymbolen aus den Zeitbereichssymbolen zu bestimmen, die zum Übertragen von Referenzsymbolen in dem ersten Uplink-Steuerkanal verwendet werden.

17. Endgerät (120, 700, 900) nach einem der Ansprüche 11 bis 15, wobei das Kommunikationsmodul (720) ferner konfiguriert ist, um dritte Konfigurationsinformationen zu empfangen, die von der Netzwerkvorrichtung übertragen werden, wobei die dritten Konfigurationsinformationen die Position von mindestens einigen Zeitbereichssymbolen aus den Zeitbereichssymbolen anzeigen, die zum Übertragen von Referenzsymbolen in dem ersten Uplink-Steuerkanal verwendet werden.

18. Endgerät (120, 700, 900) nach einem der Ansprüche 11 bis 17, wobei das Kommunikationsmodul (720) konfiguriert ist, um entsprechend den in den zweiten Uplink-Steuerinformationen getragenen Informationen eine Sequenz zu bestimmen, die auf den Zielzeitbereichssymbolen übertragen wird, wobei Sequenzen, die unterschiedlichen Informationen entsprechen, die in den zweiten Uplink-Steuerinformationen getragen werden, unterschiedlich sind.

19. Endgerät (120, 700, 900) nach Anspruch 18, wobei das Kommunikationsmodul (720) konfiguriert ist, um, wenn die von dem zweiten Uplink-Steuerkanal getragenen Informationen alle negative Quittungen sind, das Übertragen einer ersten Sequenz auf dem Zielzeitbereichssymbol in dem ersten Uplink-Steuerkanal zu bestimmen, wobei die erste Sequenz eine Sequenz ist, die auf den Zielzeitbereichssymbolen übertragen wird, wenn das Endgerät (120, 700, 900) die ersten Uplink-Steuerinformationen unter Verwendung des ersten Uplink-Steuerkanals einzeln überträgt.

20. Endgerät (120, 700, 900) nach Anspruch 18, wobei eine Ordnungsnummer der Sequenz durch das Endgerät (120, 700, 900) gemäß einer Ordnungsnummer des ersten Uplink-Steuerkanals bestimmt wird.

## Revendications

1. Procédé de communication, comprenant les étapes consistant à :
déterminer (S310), par un terminal (120, 700, 900), de transmettre des premières informations de commande de liaison montante et des deuxièmes informations de commande de liaison montante dans une unité de temps cible, dans lequel le terminal (120, 700, 900) utilise un premier canal de commande de liaison montante lorsqu'il transmet individuellement les premières informations de liaison montante dans l'unité de temps cible, et le terminal (120, 700, 900) utilise un deuxième canal de commande de liaison montante lorsqu'il transmet individuellement les deuxièmes informations de commande de liaison montante dans l'unité de temps cible, et un nombre de symboles du domaine temporel inclus dans le premier canal de commande de liaison montante est supérieur à un nombre de symboles du domaine temporel inclus dans le deuxième canal de commande de liaison montante ;
utiliser (S320), par le terminal (120, 700, 900), des symboles du domaine temporel cibles dans le premier canal de commande de liaison montante pour transmettre les deuxièmes informations de commande de liaison montante dans l'unité de temps cible,
dans lequel les symboles du domaine temporel cibles sont au moins certains symboles du domaine temporel parmi les symboles du domaine temporel utilisés pour transmettre des symboles de référence dans le premier canal de commande de liaison montante ;
utiliser (S330), par le terminal (120, 700, 900), des symboles du domaine temporel, autres que les symboles du domaine temporel utilisés pour transmettre des symboles de référence dans le premier canal de commande de liaison montante, pour transmettre les premières informations de commande de liaison montante dans l'unité de temps cible.

2. Procédé de communication selon la revendication 1, dans lequel, avant d'utiliser (S320), par le terminal (120, 700, 900), des symboles du domaine temporel cibles dans le premier canal de commande de liaison montante pour transmettre les deuxièmes informations de commande de liaison montante dans l'unité de temps cible, le procédé de communication comprend en outre au moins l'une des étapes suivantes consistant à :
déterminer, par le terminal (120, 700, 900), que le nombre de symboles du domaine temporel dans le deuxième canal de commande de liaison montante n'est pas supérieur au nombre de symboles du domaine temporel utilisés pour transmettre les symboles de référence dans le premier canal de commande de liaison montante ;
déterminer, par le terminal (120, 700, 900), que le nombre d'unités de ressource pour transmettre le deuxième canal de commande de liaison montante n'est pas supérieur au nombre d'unités de ressource utilisées pour transmettre les symboles de référence dans le premier canal de commande de liaison montante ;
déterminer, par le terminal (120, 700, 900), qu'une largeur de bande du domaine fréquentiel utilisée pour transmettre le deuxième canal de commande de liaison montante n'est pas supérieure à la largeur de bande du domaine fréquentiel utilisée pour transmettre le premier canal de commande de liaison montante.

3. Procédé de communication selon la revendication 1 ou 2, dans lequel avant d'utiliser (S320), par le terminal (120, 700, 900), des symboles du domaine temporel cibles dans le premier canal de commande de liaison montante pour transmettre les deuxièmes informations de commande de liaison montante dans l'unité de temps cible, le procédé de communication comprend en outre l'étape consistant à :
recevoir, par le terminal (120, 700, 900), des premières informations de configuration transmises par un dispositif de réseau, dans lequel les premières informations de configuration sont utilisées pour indiquer que le terminal (120, 700, 900) prend en charge la transmission des premières informations de commande de liaison montante et des deuxièmes informations de liaison montante dans une même unité de temps.

4. Procédé de communication selon l'une quelconque des revendications 1 à 3, dans lequel avant d'utiliser (S320), par le terminal (120, 700, 900), des symboles du domaine temporel cibles dans le premier canal de commande de liaison montante pour transmettre les deuxièmes informations de commande de liaison montante dans l'unité de temps cible, le procédé de communication comprend en outre l'étape consistant à :
recevoir, par le terminal (120, 700, 900), des deuxièmes informations de configuration transmises par le dispositif de réseau, dans lequel les deuxièmes informations de configuration sont utilisées pour indiquer que le terminal (120, 700, 900) prend en charge la transmission des deuxièmes informations de commande de liaison montante en utilisant les symboles du domaine temporel pour transmettre les symboles de référence.

5. Procédé de communication selon l'une quelconque des revendications 1 à 4, dans lequel une largeur de bande des symboles du domaine temporel cibles n'est pas inférieure à la largeur de bande d'autres symboles du domaine temporel dans le premier canal de commande de liaison montante.

6. Procédé de communication selon l'une quelconque des revendications 1 à 5, dans lequel l'étape consistant à utiliser (S320), par le terminal (120, 700, 900), des symboles du domaine temporel cibles dans le premier canal de commande de liaison montante pour transmettre les deuxièmes informations de commande de liaison montante dans une unité de temps cible, consiste à :
déterminer, par le terminal (120, 700, 900), en fonction d'une position des symboles du domaine temporel utilisés pour transmettre le deuxième canal de commande de liaison montante, une position d'au moins certains symboles du domaine temporel parmi les symboles du domaine temporel utilisés pour transmettre des symboles de référence dans le premier canal de commande de liaison montante.

7. Procédé de communication selon l'une quelconque des revendications 1 à 5, comprenant en outre l'étape consistant à :
recevoir, par le terminal (120, 700, 900), des troisièmes informations de configuration transmises par le dispositif de réseau, dans lequel les troisièmes informations de configuration sont utilisées pour indiquer la position d'au moins certains symboles du domaine temporel parmi les symboles du domaine temporel utilisés pour transmettre des symboles de référence dans le premier canal de commande de liaison montante.

8. Procédé de communication selon l'une quelconque des revendications 1 à 7, dans lequel l'étape consistant à utiliser (S320), par le terminal (120, 700, 900), des symboles du domaine temporel cibles dans le premier canal de commande de liaison montante pour transmettre les deuxièmes informations de commande de liaison montante dans l'unité de temps cible, consiste à :
déterminer, par le terminal (120, 700, 900), en fonction des informations transportées dans les deuxièmes informations de commande de liaison montante, une séquence qui est transmise sur les symboles du domaine temporel cibles, dans lequel des séquences correspondant à différentes informations transportées dans les deuxièmes informations de commande de liaison montante sont différentes.

9. Procédé de communication selon la revendication 8, dans lequel l'étape consistant à déterminer, par le terminal (120, 700, 900), en fonction des informations transportées dans le deuxième canal de commande de liaison montante, la séquence qui est transmise sur les symboles du domaine temporel cibles, consiste à :
lorsque les informations transportées par le deuxième canal de commande de liaison montante sont toutes des accusés de réception négatifs, déterminer, par le terminal (120, 700, 900), de transmettre une première séquence sur le symbole du domaine temporel cible dans le premier canal de commande de liaison montante, dans lequel la première séquence est une séquence qui est transmise sur les symboles du domaine temporel cible lorsque le terminal (120, 700, 900) transmet individuellement les premières informations de commande de liaison montante en utilisant le premier canal de commande de liaison montante.

10. Procédé de communication selon la revendication 8, dans lequel un numéro d'ordre de la séquence est déterminé par le terminal (120, 700, 900) en fonction d'un numéro d'ordre du premier canal de commande de liaison montante.

11. Terminal (120, 700, 900), comprenant :
un module de traitement (710), configuré pour déterminer la transmission de premières informations de commande de liaison montante et de deuxièmes informations de commande de liaison montante dans une unité de temps cible, dans lequel le terminal (120, 700, 900) utilise un premier canal de commande de liaison montante lorsqu'il transmet individuellement les premières informations de liaison montante dans l'unité de temps cible, et le terminal (120, 700, 900) utilise un deuxième canal de commande de liaison montante lorsqu'il transmet individuellement les deuxièmes informations de commande de liaison montante dans l'unité de temps cible, et un nombre de symboles du domaine temporel inclus dans le premier canal de commande de liaison montante est supérieur à un nombre de symboles du domaine temporel inclus dans le deuxième canal de commande de liaison montante ;
un module de communication (720), configuré pour transmettre, dans l'unité de temps cible, les deuxièmes informations de commande de liaison montante en utilisant des symboles du domaine temporel cibles dans le premier canal de commande de liaison montante, dans lequel les symboles du domaine temporel cibles sont au moins certains symboles du domaine temporel parmi les symboles du domaine temporel, utilisés pour transmettre des symboles de référence, dans le premier canal de commande de liaison montante ;
dans lequel le module de communication (720) est en outre configuré pour transmettre, dans l'unité de temps cible, les premières informations de commande de liaison montante en utilisant des symboles du domaine temporel, autres que les symboles du domaine temporel pour transmettre des symboles de référence, dans le premier canal de commande de liaison montante.

12. Terminal (120, 700, 900) selon la revendication 11, dans lequel, avant que le module de communication (720) ne transmette, dans l'unité de temps cible, les deuxièmes informations de commande de liaison montante en utilisant des symboles du domaine temporel cibles dans le premier canal de commande de liaison montante, le module de traitement (710) est en outre configuré pour effectuer l'une des étapes suivantes consistant à :
déterminer que le nombre de symboles du domaine temporel dans le deuxième canal de commande de liaison montante n'est pas supérieur au nombre de symboles du domaine temporel utilisés pour transmettre les symboles de référence dans le premier canal de commande de liaison montante ;
déterminer que le nombre d'unités de ressource pour transmettre le deuxième canal de commande de liaison montante n'est pas supérieur au nombre d'unités de ressource utilisées pour transmettre les symboles de référence dans le premier canal de commande de liaison montante ;
déterminer qu'une largeur de bande du domaine fréquentiel utilisée pour transmettre le deuxième canal de commande de liaison montante n'est pas supérieure à la largeur de bande du domaine fréquentiel utilisée pour transmettre le premier canal de commande de liaison montante.

13. Terminal (120, 700, 900) selon la revendication 11 ou 12, dans lequel, avant que le module de communication (720) ne transmette, dans l'unité de temps cible, les deuxièmes informations de commande de liaison montante en utilisant des symboles de référence du domaine temporel cibles dans le premier canal de commande de liaison montante, le module de communication (720) est en outre configuré pour recevoir des premières informations de configuration transmises par un dispositif de réseau, les premières informations de configuration indiquant que le terminal (120, 700, 900) prend en charge la transmission des premières informations de commande de liaison montante et des deuxièmes informations de liaison montante dans une même unité de temps.

14. Terminal (120, 700, 900) selon l'une quelconque des revendications 11 à 13, dans lequel, avant que le module de communication (720) ne transmette, dans l'unité de temps cible, les deuxièmes informations de commande de liaison montante en utilisant des symboles du domaine temporel cibles dans le premier canal de commande de liaison montante, le module de communication (720) est en outre configuré pour recevoir les deuxièmes informations de configuration transmises par le dispositif de réseau, les deuxièmes informations de configuration indiquant que le terminal (120, 700, 900) prend en charge la transmission des deuxièmes informations de commande de liaison montante en utilisant les symboles du domaine temporel pour transmettre les symboles de référence.

15. Terminal (120, 700, 900) selon l'une quelconque des revendications 11 à 14, dans lequel une largeur de bande des symboles du domaine temporel cibles n'est pas inférieure à la largeur de bande d'autres symboles du domaine temporel dans le premier canal de commande de liaison montante.

16. Terminal (120, 700, 900) selon l'une quelconque des revendications 11 à 15, dans lequel le module de communication (720) est configuré pour déterminer, en fonction d'une position des symboles du domaine temporel utilisés pour transmettre le deuxième canal de commande de liaison montante, une position d'au moins certains symboles du domaine temporel parmi les symboles du domaine temporel utilisés pour transmettre des symboles de référence dans le premier canal de commande de liaison montante.

17. Terminal (120, 700, 900) selon l'une quelconque des revendications 11 à 15, dans lequel le module de communication (720) est en outre configuré pour recevoir des troisièmes informations de configuration transmises par le dispositif de réseau, les troisièmes informations de configuration indiquant la position d'au moins certains symboles du domaine temporel parmi les symboles du domaine temporel utilisés pour transmettre des symboles de référence dans le premier canal de commande de liaison montante.

18. Terminal (120, 700, 900) selon l'une quelconque des revendications 11 à 17, dans lequel le module de communication (720) est configuré pour déterminer, en fonction des informations transportées dans les deuxièmes informations de commande de liaison montante, une séquence qui est transmise sur les symboles du domaine temporel cibles, dans lequel des séquences correspondant à différentes informations transportées dans les deuxièmes informations de commande de liaison montante sont différentes.

19. Terminal (120, 700, 900) selon la revendication 18, dans lequel le module de communication (720) est configuré pour déterminer, lorsque les informations transportées par le deuxième canal de commande de liaison montante sont toutes des accusés de réception négatifs, la transmission d'une première séquence sur le symbole du domaine temporel cible dans le premier canal de commande de liaison montante, dans lequel la première séquence est une séquence qui est transmise sur les symboles du domaine temporel cibles lorsque le terminal (120, 700, 900) transmet individuellement les premières informations de commande de liaison montante en utilisant le premier canal de commande de liaison montante.

20. Terminal (120, 700, 900) selon la revendication 18, dans lequel un numéro d'ordre de la séquence est déterminé par le terminal (120, 700, 900) en fonction d'un numéro d'ordre du premier canal de commande de liaison montante.
